# EUROPÄISCHE PATENTANMELDUNG

(11) **EP 4 327 995 A1**
(43) Veröffentlichungstag der Anmeldung: **28.02.2024**
(21) Anmeldenummer: 23188855.3
(22) Anmeldetag: 01.08.2023
(51) Int. Cl.: B26F 1/14, B65B 61/02, B26D 1/00, B65B 9/04, B65B 31/02

(54) **TIEFZIEHVERPACKUNGSMASCHINE UND VERFAHREN ZUM HERSTELLEN EINER LOCHUNG**

(30) Priorität: 12.08.2022 DE 102022120395
(71) Anmelder: MULTIVAC Sepp Haggenmüller SE & Co. KG, 87787 Wolfertschwenden (DE)
(72) Erfinder: PATZ, Dominik, 87435 Kempten (DE); FERK, Florian, 87730 Bad Grönenbach (DE); WEILAND, Markus, 87730 Bad Grönenbach (DE)
(74) Vertreter: Grünecker Patent- und Rechtsanwälte PartG mbB

(57) **Zusammenfassung**

Die Erfindung betrifft eine Tiefziehverpackungsmaschine (1), umfassend zumindest eine Arbeitsstation (A) zum Beheizen einer Unterfolie (U) für einen Formvorgang und seitliche Transportketten (10, 10a), die dazu konfiguriert sind, die Unterfolie (U) eingangs der Tiefziehverpackungsmaschine (1) seitlich zu ergreifen und die Unterfolie (U) in einer Arbeitsrichtung (R) intermittierend durch die Arbeitsstation (A) hindurch zu transportieren, wobei die Arbeitsstation (A) ein höhenverstellbares Werkzeugunterteil (14), ein darüber positioniertes Werkzeugoberteil (15) mit mindestens einem Heizkörper (16) zum Beheizen der Unterfolie (U) und eine Stanzeinrichtung (18) mit mindestens einer Stanzeinheit (19) zum Herstellen einer Lochung (L) in einem Randstreifenbereich (26) der Unterfolie (U) aufweist, wobei die Stanzeinheit (19) zumindest einen Lochstempel (20), der am Werkzeugunterteil (14) vorgesehen ist, und zumindest einen mit dem Lochstempel (20) zusammenarbeitenden Niederhalter (21), der am Werkzeugoberteil (15) vorgesehen ist, aufweist, und wobei der Lochstempel (20) einen Lochstempelkörper (29) mit einem der seitlichen Transportkette (10, 10a) zugewandten äußeren Randbereich (31) und mit einem dem Heizkörper (16) zugewandten inneren Randbereich (32) aufweist, wobei der Niederhalter (21) zumindest teilweise zwischen einer der seitlichen Transportketten (10, 10a) und dem Heizkörper (16) angeordnet ist, wobei der Niederhalter (21) weiter zum äußeren Randbereich (31) des Lochstempelkörpers (29) als zum inneren Randbereich (32) des Lochstempelkörpers (29) hin versetzt positioniert ist.

## Beschreibung

Die Erfindung betrifft eine Tiefziehverpackungsmaschine gemäß dem Oberbegriff des Anspruchs 1 und ein Verfahren an einer Tiefziehverpackungsmaschine zum Herstellen einer Lochung gemäß dem Anspruch 12.

Eine derartigere Tiefziehverpackungsmaschine ist aus der DE 10 2018 214 760 A1 bekannt.

Die herkömmlichen Tiefziehverpackungsmaschinen besitzen in der Regel eine Formstation, eine Siegelstation, eine Querschneideeinrichtung sowie eine Längsschneideeinrichtung. Diese sind in dieser Reihenfolge in einer Arbeitsrichtung an einem Maschinengestell angeordnet. Eine Unterfolienbahn wird am Eingang der Tiefziehverpackungsmaschine seitlich von Transportketten gegriffen und in die Arbeitsrichtung transportiert. Ein Bereich der Unterfolienbahn wird beispielsweise mit einer Heizplatte der Formstation oder einer Vorheizstation beheizt, und in der Formstation werden Mulden bzw. Verpackungsmulden in die Unterfolienbahn tiefgezogen. Nach dem Befüllen der Mulden werden dieselben weiter zu der Siegelstation transportiert. In der Siegelstation findet ein Evakuier- und Begasungsprozess statt. Für diese Prozesse ist am Randstreifen der Unterfolienbahn eine seitliche Lochung vorgesehen. Unter dem Begriff "Lochung" können mehrere in die Arbeitsrichtung voneinander beanstandete Durchbrüche oder Öffnungen verstanden werden. Gase können durch die einzelnen Durchbrüche in die Mulden eingeblasen und aus den Mulden abgesaugt werden. Für das Einbringen der Lochung sind beispielsweise in der Formstation oder in der Vorheizstation Stanzeinheiten zwischen einer der seitlichen Transportketten und der Heizplatte der Formstation vorgesehen.

Eines der Probleme der herkömmlichen Tiefziehverpackungsmaschinen besteht darin, dass eine seitliche Erweiterung des Heizbereiches bzw. die Breite der Heizplatte durch die seitlichen Transportketten beschränkt ist. Im Grunde genommen legen die seitlichen Transportketten die Breite der Formstation und damit auch die Dimension der darin aufgenommenen Heizplatte fest. Dies beschränkt den Heizbereich der Unterfolienbahn und verursacht die Bildung von kalten/warmen Zonen in der Nähe des Tiefziehvorgangs, wo es zu Wellenbildungen in der Unterfolienbahn kommen kann. Die Wellenbildungen können den Siegelvorgang beeinträchtigen.

Des Weiteren müssen die Heizplatten der herkömmlichen Tiefziehverpackungsmaschinen gemäß den spezifischen Verpackungsformaten bzw. Verpackungsformen und Verpackungsgestaltungen angepasst bzw. in einigen seitlichen/länglichen Bereichen sogar hinsichtlich Aufreißecken erweitert werden. Beispielsweise kann eine rechteckige Heizplatte für ein Beheizen einer Unterfolie mit Verpackungsmulden, umfassend einen ohrförmigen Bereich (zum Bilden von abgesetzten Ecken bzw. Abrissecken) nicht ausreichend sein, um den ohrförmigen Bereich abzudecken. In diesem Fall muss die Heizplatte auch speziell einen solchen ohrförmigen Bereich haben. Dies erfordert eine neue Aufteilung/Gruppierung der Durchbrüche der Lochung bzw. eine neue längliche Aufteilung/Gruppierung der Stanzeinheiten, damit die Stanzeinheiten mit der Heizplatte nicht kollidieren. Dafür müssen die Heizplatten und die Stanzeinheiten für unterschiedliche Verpackungsformen maßgeschneidert werden, was erhebliche Baukosten und Zeitaufwand mit sich bringt.

In den herkömmlichen Tiefziehverpackungsmaschinen umfasst die Stanzeinheit einen im Querschnitt kreisförmigen oder ovalen Lochstempel und einen darüber, mittig des Lochstempels angeordneten Niederhalter, die dazu konfiguriert sind, in der Unterfolienbahn Durchbrüche bzw. Öffnungen und Lappen für die Durchbrüche einzubringen. Ein Lappen ist ein Teil der Unterfolie, wobei der Lappen an einem Randbereich des jeweiligen Durchbruchs mit der Unterfolie verbunden ist. Das Problem besteht darin, dass derartige Lappen während des Siegelvorgangs nach unten (unterhalb der Unterfolie) kippen können und den Evakuier- und Begasungsprozess teilweise verhindern.

Aufgabe der vorliegenden Erfindung ist es, eine Tiefziehverpackungsmaschine und ein Verfahren an einer Tiefziehverpackungsmaschine zum Herstellen einer Lochung zur Verfügung zu stellen, um die oben benannten Probleme zu beseitigen.

Diese Aufgabe wird jeweils durch die Merkmale des Anspruchs 1 und des Anspruchs 12 gelöst.

Die Erfindung betrifft zumindest eine Arbeitsstation zum Beheizen einer Unterfolie für einen Formvorgang und seitliche Transportketten, die dazu konfiguriert sind, die Unterfolie eingangs der Tiefziehverpackungsmaschine seitlich zu ergreifen und die Unterfolie in einer Arbeitsrichtung intermittierend durch die Arbeitsstation hindurch zu transportieren. Die Arbeitsstation weist ein höhenverstellbares Werkzeugunterteil, ein darüber positioniertes Werkzeugoberteil mit mindestens einen Heizkörper zum Beheizen der Unterfolie und eine Stanzeinrichtung mit mindestens einer Stanzeinheit zum Herstellen mindestens einer Lochung in einem Randstreifenbereich der Unterfolie auf. Die Stanzeinheit weist zumindest einen Lochstempel, der am Werkzeugunterteil vorgesehen ist, und zumindest einen mit dem Lochstempel zusammenarbeitenden Niederhalter, der am Werkzeugoberteil vorgesehen ist, auf. Der Lochstempel weist einen Lochstempelkörper mit einem der seitlichen Transportkette zugewandten äußeren Randbereich und mit einem dem Heizkörper zugewandten inneren Randbereich auf. Der Niederhalter ist zumindest teilweise zwischen einer der seitlichen Transportketten und dem Heizkörper angeordnet. Erfindungsgemäß ist der Niederhalter weiter zum äußeren Randbereich des Lochstempelkörpers als zum inneren Randbereich des Lochstempelkörpers hin versetzt positioniert. Der äußere Randbereich des Lochstempelkörpers ist der dem Lochstempel nächstgelegenen seitlichen Transportkette zugewandt. Das Werkzeugunterteil kann mittels einer Hubvorrichtung verstellbar sein. Zum Erfüllen des erfindungsgemäßen Versatzes kann es genügen, wenn lediglich der mit der Folie in Kontakt tretende Bereich des Niederhalters weiter zum äußeren Randbereich des Lochstempelkörpers als zum inneren Randbereich des Lochstempelkörpers hin versetzt positioniert ist.

Die Erfindung bringt den Vorteil, dass der Lochstempel schmaler und damit der Heizkörper quer zur Arbeitsrichtung breiter ausgebildet werden kann. Dementsprechend kann ein größerer seitlicher Bereich der Unterfolien beheizt werden. Beziehungsweise kann eine Beheizung des gesamten Verpackungsformats bis zum Schnittmaß (Verpackungsrand bzw. Längsschneidung) und darüber hinaus erweitert werden, um eine optimale Erwärmung und Umformung der Folienbahn zu ermöglichen. Dies verhindert Wellenbildungen in der Unterfolie im Bereich der Tiefziehung insbesondere bei Folien aus Monomaterialein bspw. aus Polypropylen, im Bereich der Siegelnaht.

Die Erfindung ermöglicht des Weiteren die Form/Größe des Heizkörpers und die Anordnung der Stanzeinheiten zu standardisieren, so dass sie, insbesondere der Heizkörper mit einheitlicher Dimensionierung bspw. als rechteckige Platte für jede Verpackungsgestaltung einsetzbar sind.

Die Erfindung ermöglicht des Weiteren einen an einem Durchbruch gebildeten Lappen derart zu deformieren und auszurichten, dass er zuverlässig während eines Siegelvorgangs bzw. während des Evakuier- und/oder Begasungsprozesses oberhalb der Unterfolie nach oben geklappt stehen bleiben.

In einer bevorzugten Ausführungsform weist das Werkzeugoberteil einen Hohlraum auf, in den sich zumindest ein Teil des Niederhalters erstreckt, wobei eine Mittelachse des Niederhalters näher an einem außenliegenden Rand des Hohlraums als eine Mittelachse des Hohlraums angeordnet ist. Durch die dezentrale Positionierung des Niederhalters innerhalb des Hohlraums ergibt sich die Möglichkeit, die Heizplatte breiter zu dimensionieren. Der Hohlraum kann einen dem Heizkörper zugewandten inneren Randbereich aufweisen.

In einer bevorzugten Ausführungsform weist der Lochstempel eine Vertiefung auf, die zumindest teilweise vom Lochstempelkörper umgeben ist. Der Lochstempelkörper kann einen Lochstempelkörperkopf und eine Lochstempelkörperstütze aufweisen. Die Vertiefung kann ein in dem Lochstempelkörperkopf gebildeter Hohlraum sein. Die Vertiefung kann dazu konfiguriert sein, beim Stanzvorgang einen Teilbereich des Niederhalters aufzunehmen.

In einer bevorzugten Ausführungsform weist der äußere Randbereich des Lochstempelkörpers eine Aussparung für den Niederhalter auf. Die Aussparung kann direkt in die Vertiefung übergehen. Der Niederhalter bzw. zumindest ein unterer Teilbereich des Niederhalters kann beim Stanzvorgang in die Aussparung des Lochstempels eintauchen.

Bevorzugt weist der innere Randbereich des Lochstempelkörpers, sprich ein der Heizplatte zugewandter Bereich, eine spitze Schneidklinge auf, die sich bis zur Aussparung des äußeren Randbereichs erstreckt. Durch die spitze Schneidklinge kann ein Durchbruch in der Unterfolie eingebracht werden. In dem Bereich der Aussparung kann die Unterfolie intakt gehalten werden. In dem Bereich der Aussparung kann die Unterfolie deformiert werden. Dadurch kann ein nach oben stehender deformierter Lappen an den jeweiligen Durchbrüchen ausgebildet werden. Der deformierte Lappen kann eine konkave oder V-förmige Form haben, wodurch er stabil ausgerichtet bleibt. Der deformierte Lappen kann während eines Siegelvorgangs oberhalb der Unterfolie ausgerichtet bleiben.

Vorteilhaft ist es, wenn der Lochstempelkörper eine ovale oder elliptische Querschnittsform ausbildet, insbesondere mit einer Breite von 3 bis 6 mm, weiter bevorzugt mit einer Breite von 5,5 mm. Durch die ovale oder elliptische Querschnittsform, insbesondere durch eine Verlagerung den Niederhalter zu eine der seitlichen Transportkette zugewandten äußeren Randbereich des Lochstempelkörpers kann der Lochstempelkörper quer zur Arbeitsrichtung schmaler ausgebildet sein, wodurch mehr Bauraum für die Heizplatte entsteht.

In einer bevorzugten Ausführungsform ist die Arbeitsstation eine Formstation zum Ausbilden von Mulden in der Unterfolie. Dies kann eine kompakte Aufbauweise für die Tiefziehverpackungsmaschine erlauben und Arbeitsschritte wie das Beheizen, das Formen und das Stanzen der Unterfolie können in der gleichen Arbeitsstation stattfinden.

Gemäß einer besonderen Ausführungsform ist die Arbeitsstation eine Vorheizstation zum Heizen der Unterfolie, wobei die Vorheizstation in der Arbeitsrichtung vorderhalb der Formstation gelagert ist. Die Vorheizstation kann als eine Heizkammer, ggf. direkt am Eingang der Formstation, ausgebildet sein, die eine obere und untere Heizplatte aufweist. Durch die Vorheizstation kann die Unterfolie gleichmäßig für das Tiefziehen beheizt werden.

Bevorzugt liegt der Heizkörper in Form einer rechteckigen Heizplatte vor. Eine rechteckige Heizplatte kann einfach hergestellt und für eine einheitliche Formstation für unterschiedliche Verpackungsformate eingesetzt werden.

In einer besonders effizienten Ausführungsform umfasst die Stanzeinrichtung mehrere, in der Arbeitsrichtung in gleichen Abständen zueinander positionierte Stanzeinheiten. Dadurch können mehrere Durchbrüche gleichzeitig in der Unterfolie eingebracht werden. Eine Reihe von Stanzeinheiten, vorzugsweise zwei bis vier Stanzeinheiten, können entlang der Arbeitsrichtung in einem rechtsseitigen Randstreifenbereich der Unterfolie angeordnet sein. Eine Reihe von Stanzeinheiten, vorzugsweise zwei bis vier Stanzeinheiten, können entlang der Arbeitsrichtung in einem linksseitigen Randstreifenbereich der Unterfolie angeordnet sein. Die Anzahl der Stanzeinheiten und/oder die Abstände zwischen den Stanzeinheiten können unabhängig des Verpackungsformats ausgelegt sein.

Bevorzugt weist die Tiefziehverpackungsmaschine eine Längsschneideeinrichtung zum Herstellen einer seitlichen Längsschneidung in der Unterfolie auf, wobei der Heizkörper der Arbeitsstation derart dimensioniert ist, dass die Unterfolie bis über die seitliche Längsschneidung hinaus beheizbar ist. Die Unterfolie kann 2 bis 10 mm, bevorzugt 3 bis 5 mm, über die seitliche Längsschneidung hinaus beheizbar sein.

Die Erfindung betrifft des Weiteren ein Verfahren an einer Tiefziehverpackungsmaschine zum Herstellen einer Lochung mit mehreren, in einer Arbeitsrichtung der Tiefziehverpackungsmaschine länglichen Durchbrüchen in einem Randstreifenbereich einer der Arbeitsstation mittels seitlichen Transportketten in der Arbeitsrichtung zugeführten Unterfolie anhand einer innerhalb der Arbeitsstation integrierten Stanzeinrichtung.

Vorteilhafterweise wird bei einem mittels der Stanzeinrichtung durchgeführten Stanzhub ein oberhalb der Unterfolie positionierter Niederhalter der Stanzeinrichtung zumindest teilweise in eine Aussparung eines unterhalb der Unterfolie positionierten Lochstempels eingetaucht, sodass nach außen hin zu den Transportketten aufgerichtete, deformierte Lappen an den jeweiligen Durchbrüchen gebildet werden.

Sämtliche Merkmale, die in Zusammenhang mit der Tiefziehverpackungsmaschine gemäß der Erfindung offenbart sind, können einzeln oder zusammen in dem Verfahren an einer Tiefziehverpackungsmaschine zum Herstellen einer Lochung gemäß der Erfindung zum Einsatz kommen. Sämtliche Merkmale, die in Zusammenhang mit dem Verfahren gemäß der Erfindung an einer Tiefziehverpackungsmaschine zum Herstellen einer Lochung offenbart sind, können einzeln oder zusammen in der Tiefziehverpackungsmaschine gemäß der Erfindung zum Einsatz kommen.

Im Folgenden werden beispielhafte Ausführungsformen anhand der Figuren erläutert.

Dabei zeigt
- Fig. 1: eine schematische Seitenansicht einer Tiefziehverpackungsmaschine,
- Fig. 2: eine schematische Perspektivansicht einer als Formstation konfigurierten Arbeitsstation der Tiefziehverpackungsmaschine,
- Fig. 3: eine schematische Teilansicht der Formstation und eine Stanzeinheit der Formstation,
- Fig. 4: eine vergrößerte Teilansicht der Formstation,
- Fig. 5: eine vergrößerte Teilansicht der Formstation mit einer gestanzten Unterfolie,
- Fig. 6: eine schematische Draufsicht der Stanzeinrichtung,
- Fig. 7: eine perspektivische Darstellung des Lochstempels,
- Fig. 8: eine schematische Darstellung einer mittels des Lochstempels gestanzten Unterfolie.

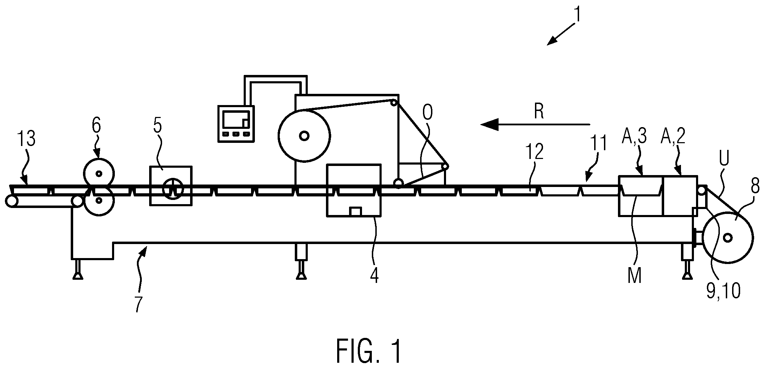

Figur 1 zeigt in schematischer Ansicht eine Tiefziehverpackungsmaschine 1. Die Tiefziehverpackungsmaschine 1 umfasst zumindest eine Arbeitsstation A zum Beheizen einer Unterfolie U für einen Formvorgang. Die Tiefziehverpackungsmaschine 1 umfasst eine Vorheizstation 2, eine Formstation 3, eine Siegelstation 4, eine Querschneideeinrichtung 5 sowie eine Längsschneideeinrichtung 6. Diese sind in dieser Reihenfolge in einer Arbeitsrichtung R an einem Maschinengestell 7 angeordnet. Die Vorheizstation 2 und die Formstation 3 bilden im Figur 1 separate Arbeitsstationen A aus, können aber auch eine integrierte Bauweise haben, d.h. als eine einzelne Arbeitsstation A vorliegen.

Am Maschinengestell 7 der Tiefziehverpackungsmaschine 1 ist eingangsseitig eine Zuführrolle 8 befestigt, von der eine Unterfolie U abgezogen wird. Die Unterfolie U ist ein bahnförmiges unteres Verpackungsmaterial. Ferner weist die Verpackungsmaschine 1 eine Vorschubeinrichtung 9 mit seitlichen Transportketten 10 auf, die die Unterfolie U ergreifen und in einem Hauptarbeitstakt taktweise in die Arbeitsrichtung R weitertransportieren.

In der Formstation 3 findet ein Tiefziehvorgang statt und dadurch werden Mulden M in die Unterfolie U geformt. Die Mulden M können zu einer Einlegestrecke 11 weitertransportiert werden, wo sie manuell oder automatisiert mit einem Produkt 12 befüllt werden können. Im Anschluss werden die mit den Produkten 12 befüllten Mulden M zu der Siegelstation 4 weitertransportiert. Mittels der Siegelstation 4 können die Mulden M mit einer Oberfolie O, die ein oberes Verpackungsmaterial bildet, versiegelt werden, sodass durch das Ansiegeln der Oberfolie O auf die Mulden M verschlossene Verpackungen V hergestellt werden, die mittels der Querschneideeinrichtung 5 und der Längsschneideinrichtung 6 vereinzelt und mittels einer Abführeinrichtung 13 abtransportiert werden können.

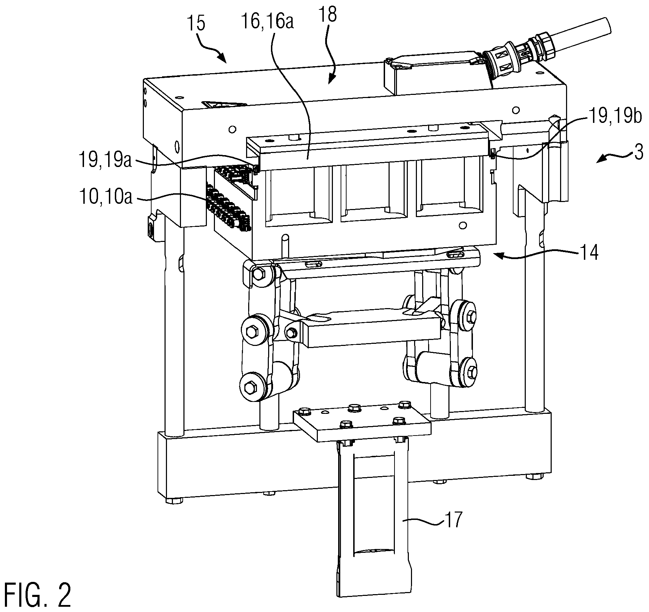

Figur 2 zeigt eine schematische Perspektivansicht der Formstation 3. Die Formstation 3 weist ein höhenverstellbares Werkzeugunterteil 14 und ein darüber positioniertes Werkzeugoberteil 15 auf. Das Werkzeugoberteil 15 umfasst einen Heizkörper 16 in Form einer Heizplatte 16a zum Beheizen der Unterfolie U. Das Werkzeugunterteil 14 wird mittels einer Hubvorrichtung 17 in Bezug auf das Werkzeugoberteil 15 bewegt, damit ein Heizvorgang, ein Formvorgang und ein Stanzvorgang stattfinden. Eine erste seitliche Transportkette10a ist in der Fig. 2 auch dargestellt.

Die Formstation 3 umfasst des Weiteren eine Stanzeinrichtung 18 mit mindestens einer Stanzeinheit 19 zum Herstellen einer seitlichen Lochung L in der Unterfolie U. Durch die Lochung L kann während eines Evakuierungs- und/oder Begasungsprozesses eine Atmosphäre in den Mulden ausgetauscht werden.

Die Stanzeinrichtung 18 kann mehrere Stanzeinheiten 19 aufweisen. Wie in der Figur 2 dargestellt ist eine erste Stanzeinheit 19a im Querschnitt betrachtet zwischen der ersten seitlichen Transportkette 10a und der Heizplatte 16a angeordnet. Eine zweite Stanzeinheit 19b ist im Querschnitt betrachtet zwischen einer zweiten seitlichen Transportkette (nicht gezeigt) und der Heizplatte 16a angeordnet, d.h. auf der gegenüberliegenden Seite.

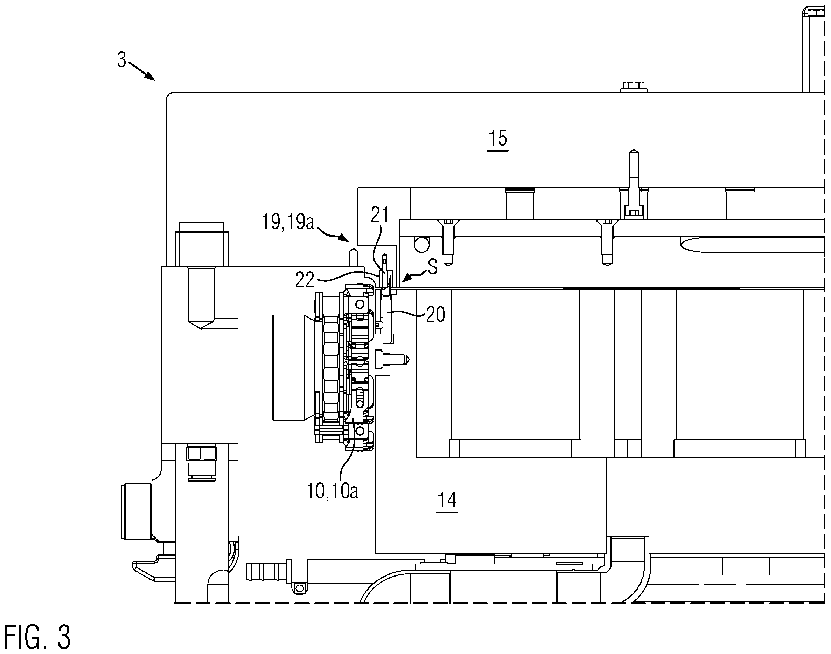

Figur 3 zeigt eine schematische Teilansicht der Formstation 3 und die erste Stanzeinheit 19. Die Stanzeinheit 19 umfasst einen Lochstempel 20, der am Werkzeugunterteil 14 vorgesehen ist. Die Stanzeinheit 19 umfasst einen mit dem Lochstempel 20 zusammenarbeitenden Niederhalter 21, der am Werkzeugoberteil 15 vorgesehen ist. Figur 3 zeigt die Formstation 3 in einem Zustand, wo das Werkzeugunterteil 14 zu dem Werkzeugoberteil 15 hinbewegt ist. Dadurch ist der Lochstempel 20 teilweise in einer Hohlraum 22 des Werkzeugoberteils 15 eingefahren und zu dem Niederhalter 21 hinbewegt. Dies bringt den Lochstempel 20 und den Niederhalter21 in eine Stanzposition S.

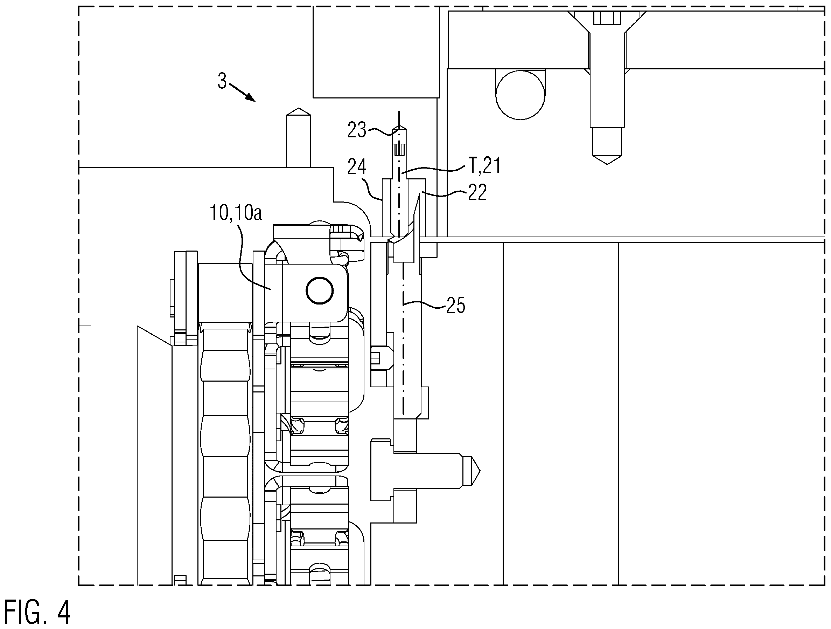

Figur 4 zeigt eine vergrößerte Teilansicht der Formstation 3. Ein Teil T des Niederhalters 21 erstreckt sich in den Hohlraum 22. Es ist hier erkennbar, dass eine Mittelachse 23 des Niederhalters 21 näher an einem außenliegenden Rand 24 des Hohlraums 22 angeordnet ist als eine Mittelachse 25 des Hohlraums 22.

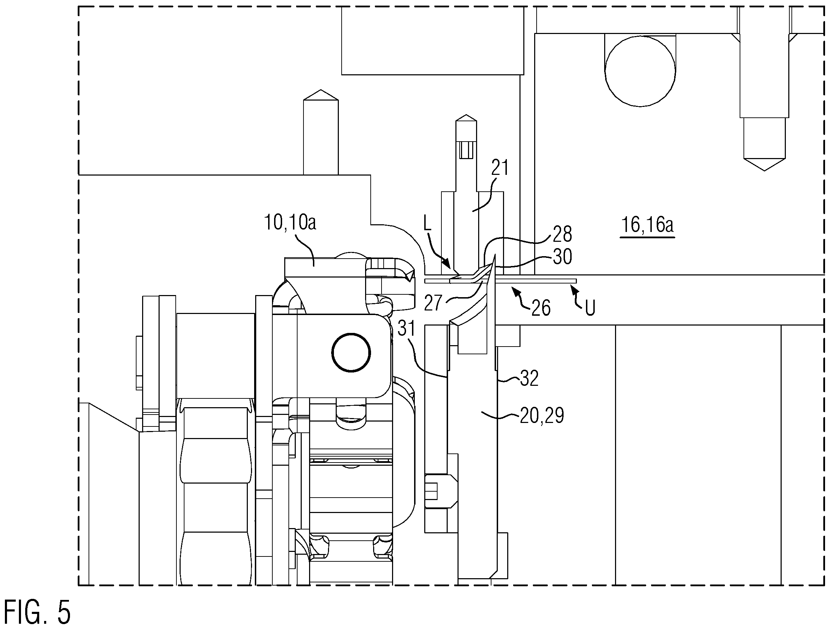

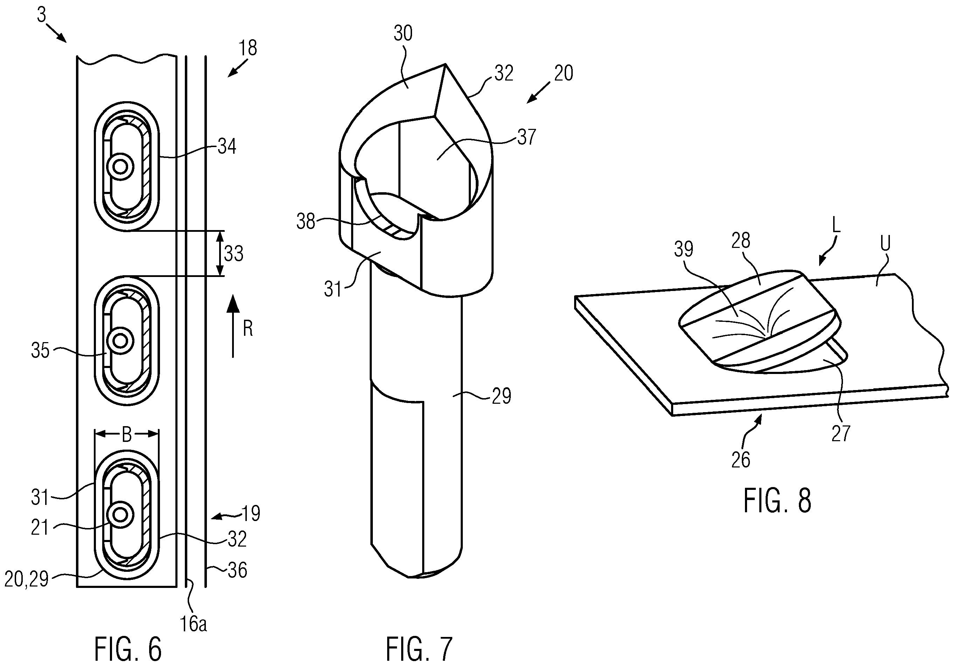

Figur 5 zeigt noch eine vergrößerte Teilansicht der Formstation 3 und eine gestanzte Unterfolie U. Die Lochung L ist an einem Randstreifenbereich 26 der Unterfolie U angebracht. Die Lochung L umfasst einen Durchbruch 27 und einen an dem Durchbruch 27 gebildeten Lappen 28. Die Geometrie des Lochstempels 20 und die gestanzte Unterfolie U wird unten in der Figur 8 näher erläutert.

Der Lochstempel 20 weist einen Lochstempelkörper 29 und eine spitze Schneidklinge 30 auf. Der Lochstempelkörper 29 hat einen der seitlichen Transportkette 10 (in dieser Figur ist eine der seitlichen Transportketten 10 die erste seitliche Transportkette 10a) zugewandten äußeren Randbereich 31 und einen dem Heizkörper 16 (in dieser Figur ist der Heizkörper 16 die Heizplatte 16a) zugewandten inneren Randbereich 32. Der Niederhalter 21 ist im Querschnitt betrachtet zwischen einer der seitlichen Transportketten 10 (in dieser Figur ist eine der seitlichen Transportketten 10 die erste seitliche Transportkette 10a) und dem Heizkörper 16 (in dieser Figur ist der Heizkörper 16 die Heizplatte 16a) angeordnet. Es ist hier erkennbar, dass der Niederhalter 21 weiter zum äußeren Randbereich 31 des Lochstempelkörpers 29 als zum inneren Randbereich 32 des Lochstempelkörpers 29 hin versetzt positioniert ist.

Figur 6 zeigt eine schematische Draufsicht der Stanzeinrichtung 18. In der Stanzeinrichtung 18 sind mehrere, in der Arbeitsrichtung R in gleichen Abständen 33 zueinander positionierte Stanzeinheiten 19 vorgesehen. Die Abstände 33 zwischen den Stanzeinheiten 19 können 20 mm sein. Der Lochstempelkörper 29 weist eine teilweise elliptische Querschnittsform 34 auf. Der Lochstempelkörper 29 weist eine Aussparung 35 auf. Die Aussparung 35 wird in der Figur 8 näher beschrieben.

In Figur 6 ist es auch erkennbar, dass der Niederhalter 21 weiter zum äußeren Randbereich 31 des Lochstempelkörpers 29 als zum inneren Randbereich 32 des Lochstempelkörpers 29 hin versetzt positioniert ist. Diese nach außen gerichtete Verlagerung des Niederhalters 21 ermöglicht es, den Lochstempelkörper 29 quer zur Arbeitsrichtung R schmaler zu gestalten. Eine Breite B der Querschnittsform 34 ist in diesem Ausführungsbeispiel 5,5 mm. Die Heizplatte 16a der Formstation 3 erstreckt sich, wie in der Figur 6 dargestellt, ungefähr 3 mm über eine Längsschneidung 36 in der Unterfolie U hinaus.

Figur 7 zeigt eine schematische Darstellung des Lochstempels 20. Der Lochstempel 20 weist eine Vertiefung 37 auf, die zumindest teilweise vom Lochstempelkörper 29 umgeben ist. Der äußere Randbereich 31 des Lochstempelkörpers 29 weist eine Aussparung 38 für den Niederhalter 21 (nicht gezeigt) auf. Es ist in der Figur 7 erkennbar, dass die spitze Schneidklinge 30 am inneren Randbereich 32 des Lochstempelkörpers 29 vorgesehen ist. Die spitze Schneidklinge 30 erstreckt sich von dem inneren Randbereich 32 des Lochstempelkörpers 29 bis zur Aussparung 38 des äußeren Randbereichs 31. Während einem mittels der Stanzeinrichtung 18 durchgeführten Stanzhub schneidet die spitze Schneidklinge 30 einen Teil der Unterfolie U zum Bilden von Durchbrüchen 27 (siehe Figur 8). Ein Teil der oberhalb der Unterfolie U positionierter Niederhalter 21 (nicht gezeigt) taucht in die Aussparung 38 ein.

Figur 8 zeigt eine schematische Darstellung einer gestanzten Unterfolie U mit dem an dem Randstreifenbereich 26 eingebrachten Durchbruch 27 und einem daran gebildeten Lappen 28. Der Lappen 28 weist einen deformierten Teilbereich 39. Der deformierte Teilbereich 39 hat eine konkave oder V-förmige Form. Dieser deformierte Teilbereich 39 wird durch das Eintauchen des Niederhalters 21 in die Aussparung 38 des Lochstempels 20 erzeugt und sorgt dafür, dass der Lappen 28 stabil und oben gerichtet stehen bleibt, sodass der Durchbruch 27 zuverlässig für einen Evakuierung- und/oder Begasungsprozess innerhalb des stromabwärts gelagerten Siegelstation 4 gestanzt werden kann.

## Patentansprüche

1. Tiefziehverpackungsmaschine (1), umfassend zumindest eine Arbeitsstation (A) zum Beheizen einer Unterfolie (U) für einen Formvorgang und seitliche Transportketten (10, 10a), die dazu konfiguriert sind, die Unterfolie (U) eingangs der Tiefziehverpackungsmaschine (1) seitlich zu ergreifen und die Unterfolie (U) in einer Arbeitsrichtung (R) intermittierend durch die Arbeitsstation (A) hindurch zu transportieren,
wobei die Arbeitsstation (A) ein höhenverstellbares Werkzeugunterteil (14), ein darüber positioniertes Werkzeugoberteil (15) mit mindestens einem Heizkörper (16) zum Beheizen der Unterfolie (U) und eine Stanzeinrichtung (18) mit mindestens einer Stanzeinheit (19) zum Herstellen einer Lochung (L) in einem Randstreifenbereich (26) der Unterfolie (U) aufweist,
wobei die Stanzeinheit (19) zumindest einen Lochstempel (20), der am Werkzeugunterteil (14) vorgesehen ist, und zumindest einen mit dem Lochstempel (20) zusammenarbeitenden Niederhalter (21), der am Werkzeugoberteil (15) vorgesehen ist, aufweist, und
wobei der Lochstempel (20) einen Lochstempelkörper (29) mit einem der seitlichen Transportkette (10, 10a) zugewandten äußeren Randbereich (31) und mit einem dem Heizkörper (16) zugewandten inneren Randbereich (32) aufweist,
wobei der Niederhalter (21) zumindest teilweise zwischen einer der seitlichen Transportketten (10, 10a) und dem Heizkörper (16) angeordnet ist,
**dadurch gekennzeichnet, dass**
der Niederhalter (21) weiter zum äußeren Randbereich (31) des Lochstempelkörpers (29) als zum inneren Randbereich (32) des Lochstempelkörpers (29) hin versetzt positioniert ist.

2. Tiefziehverpackungsmaschine gemäß Anspruch 1, **dadurch gekennzeichnet, dass** das Werkzeugoberteil (15) einen Hohlraum (22) aufweist, in den sich zumindest ein Teil (T) des Niederhalters (21) erstreckt, wobei eine Mittelachse (23) des Niederhalters (22) näher an einem außenliegenden Rand (24) des Hohlraums (22) als eine Mittelachse (23) des Hohlraums (22) angeordnet ist.

3. Tiefziehverpackungsmaschine gemäß 1 oder 2, **dadurch gekennzeichnet, dass** der Lochstempel (20) eine Vertiefung (37) aufweist, die zumindest teilweise vom Lochstempelkörper (29) umgeben ist.

4. Tiefziehverpackungsmaschine gemäß einem der vorangehenden Ansprüche, **dadurch gekennzeichnet, dass** der äußere Randbereich (31) des Lochstempelkörpers (29) eine Aussparung (35) für den Niederhalter (21) aufweist.

5. Tiefziehverpackungsmaschine gemäß Anspruch 4, **dadurch gekennzeichnet, dass** der innere Randbereich (32) des Lochstempelkörpers (29) eine spitze Schneidklinge (30) aufweist, die sich bis zur Aussparung (35) des äußeren Randbereichs (31) erstreckt.

6. Tiefziehverpackungsmaschine gemäß einem der vorangehenden Ansprüche, **dadurch gekennzeichnet, dass** der Lochstempelkörper (29) eine ovale oder elliptische Querschnittsform (34) ausbildet, insbesondere mit einer Breite (B) von 3 bis 6 mm, weiter bevorzugt mit einer Breite (B) von 5,5 mm.

7. Tiefziehverpackungsmaschine gemäß einem der vorangehenden Ansprüche, **dadurch gekennzeichnet, dass** die Arbeitsstation (A) eine Formstation (3) zum Ausbilden von Mulden (M) in der Unterfolie (U) ist.

8. Tiefziehverpackungsmaschine gemäß einem der vorangehenden Ansprüche, **dadurch gekennzeichnet, dass** die Arbeitsstation (A) eine Vorheizstation (2) zum Heizen der Unterfolie (U) ist, wobei die Vorheizstation (2) in der Arbeitsrichtung (R) vorderhalb der Formstation (3) gelagert ist.

9. Tiefziehverpackungsmaschine gemäß einem der vorangehenden Ansprüche, **dadurch gekennzeichnet, dass** der Heizkörper (16) in Form einer rechteckigen Heizplatte (16a) vorliegt.

10. Tiefziehverpackungsmaschine gemäß einem der vorangehenden Ansprüche, **dadurch gekennzeichnet, dass** die Stanzeinrichtung (18) mehrere, in der Arbeitsrichtung (R) in gleichen Abständen (33) zueinander positionierte Stanzeinheiten (19) umfasst.

11. Tiefziehverpackungsmaschine gemäß einem der vorangehenden Ansprüche, **dadurch gekennzeichnet, dass** die Tiefziehverpackungsmaschine (1) eine Längsschneideeinrichtung (6) zum Herstellen einer seitlichen Längsschneidung (36) in der Unterfolie (U) aufweist, wobei der Heizkörper (16) der Arbeitsstation (A) derart dimensioniert ist, dass die Unterfolie (U) bis über die seitliche Längsschneidung (36) hinaus beheizbar ist.

12. Verfahren an einer Tiefziehverpackungsmaschine (1) zum Herstellen einer Lochung (L) mit mehreren, in einer Arbeitsrichtung (R) der Tiefziehverpackungsmaschine (1) länglichen Durchbrüchen (27) in einem Randstreifenbereich (26) einer der Arbeitsstation (A) mittels seitlichen Transportketten (10, 10a) in der Arbeitsrichtung (R) zugeführten Unterfolie (U) anhand einer innerhalb der Arbeitsstation (A) integrierten Stanzeinrichtung (18).

13. Verfahren gemäß Anspruch 12, **dadurch gekennzeichnet, dass** bei einem mittels der Stanzeinrichtung (18) durchgeführten Stanzhub ein oberhalb der Unterfolie (U) positionierter Niederhalter (21) der Stanzeinrichtung (18) zumindest teilweise in eine Aussparung (35) eines unterhalb der Unterfolie (U) positionierten Lochstempels (20) eintaucht, sodass nach außen hin zu den Transportketten (10, 10a) aufgerichtete, deformierte Lappen (28) an den jeweiligen Durchbrüchen (27) gebildet werden.
